# EUROPEAN PATENT APPLICATION

(11) **EP 2 068 483 A1**
(43) Date of publication of application: **10.06.2009**
(21) Application number: 07828823.0
(22) Date of filing: 28.09.2007
(51) Int. Cl.: H04L 1/16, H04L 1/00, H04L 29/08, H04Q 7/38

(54) **DEVICE AND METHOD FOR TRANSMITTING UPLINK CONTROL CHANNEL**

(30) Priority: 03.10.2006 JP 2006272349
(71) Applicant: NTT DoCoMo, Inc., Chiyoda-ku Tokyo 100-6150 (JP)
(72) Inventor: MIKI, Nobuhiko, Tokyo 100-6150 (JP); HIGUCHI, Kenichi, Tokyo 100-6150 (JP); SAWAHASHI, Mamoru, Tokyo 100-6150 (JP)
(74) Representative: HOFFMANN EITLE
(86) International application number: PCT/JP2007/069082
(87) International publication number: WO 2008/041653

(57) **Abstract**

A user apparatus which is used in a communications system in which a synchronous or non-synchronous ARQ is performed is disclosed. The user apparatus includes a unit which receives a downlink control channel; a unit which prepares an uplink data channel; a unit which prepares an uplink control channel accompanying the uplink data channel; and a unit which prepares a retransmit packet according to acknowledgement information included in the downlink control channel, wherein when the retransmit packet is transmitted as the uplink data channel, the uplink control channel includes retransmit format information indicating how the retransmit packet has been derived from a transmitted packet, and transmit format information including at least a data modulation scheme used for the uplink data channel, and wherein the downlink control channel includes the acknowledgment information which has been channel-encoded with resource allocation information for the uplink data channel.

## Description

### BACKGROUND OF THE INVENTION

### 1. Field of the Invention

The present invention generally relates to the technical field of mobile communications, and particularly relates to an apparatus for and method of transmitting an uplink control channel accompanying an uplink data channel.

### 2. Description of the Related Art

In such a technical field as described above, an HSUPA (High Speed Uplink Packet Access) scheme is already being proposed for achieving increased quality and speed in 3GPP uplink. More specifically, techniques of Synchronous Automatic Repeat request (ARQ), Adaptive Modulation and channel Coding (AMC), and time scheduling are being used.

In the HSUPA scheme, a Code Division Multiple Access (CDMA) scheme is being used, where the respective users simultaneously transmit signals over the same frequency. While an own-station transmit signal is directly linked to other-station interference, the signal power greatly affects the signal quality. Thus, it is preferable for the transmit power to be controlled properly. Thus, it is allowed for the user apparatus to transmit an uplink data channel with an MCS number and/or a transmit power that are different from those designated by a base station. The MCS number is information which specifies a data modulation scheme and a channel encoding rate. In general, the large MCS number corresponds to a high-speed transmission rate, while the small MCS number corresponds to a low-speed transmission rate. For example, let us assume that a downlink L1/L2 control channel has designated, at a certain time, that a user apparatus would transmit an uplink data channel with the MCS number of 5. One of the options for the user apparatus is to transmit the uplink data channel with the as-is MCS number of 5. However, when the data amount of the uplink data channel of the user apparatus is very small, the data may be transmitted with the MCS number of 3 at the user's own discretion. While using a smaller MCS number leads to a lower transmission rate, the signal redundancy increases, making it possible to increase the reliability. Generally, a lower MCS also leads to a smaller required receive SINR. Thus, a user apparatus using an MCS which is lower than an MCS designated makes it possible to reduce the transmit power, thus decreasing the power of interference to other cells.

This type of HSUPA technique is disclosed in Non-Patent document 1, for example.

Non-patent document 1: 3GPP TR 25.808, "Technical Specification Group Radio Access Network FDD Enhanced Uplink Physical Layer Aspects"

### SUMMARY OF THE INVENTION

### [Problem(s) to be solved by the Invention]

However, with the related-art schemes, a large number of control information sets accompanying the uplink data channel have to be transmitted. Specific examples of the uplink control information set include a modulation scheme and a channel encoding scheme (MCS number) that are actually used for the uplink data channel, information (version information) indicating how a retransmit packet has been derived from the transmitted packet, new-or-old indicating information which indicates whether a packet is a retransmit packet, etc. There is a problem that the overhead in the uplink data transmission becomes relatively large due to these numerous control information sets.

On the contrary, in a future mobile communications system allowing the use of a wider bandwidth, orthogonalization among users is being proposed from a point of view of suppressing interference, etc. The orthogonalization includes Frequency Division Multiple Access (FDMA), Time Division Multiple Access (TDMA), Code Division Multiple Access (CDMA), or the combination thereof. The respective users use different frequencies, so that the orthogonality among the users is maintained in quite a strict manner. As a result, a small discrepancy in the signal power would not have a large effect in the interference and/or quality in comparison to a related-art scheme. In other words, the significance of the user apparatus changing, at the user's own discretion, the MCS reported from a base station to a more appropriate one may diminish relative to related-art schemes. Up to this time, no document has apparently been published that specifically discloses a method of transmitting an uplink control channel in the future communications system based on such investigation as described above.

The problem to be solved by the present invention is to reduce an amount of control information accompanying the uplink data channel.

### [Means for solving the Problem]

In the present invention, a user apparatus is used in a communications system in which a synchronous or non-synchronous ARQ is performed. The user apparatus includes a unit which receives a downlink control channel; a unit which prepares an uplink data channel; a unit which prepares an uplink control channel accompanying the uplink data channel; and a unit which prepares a retransmit packet according to acknowledgement information included in the downlink control channel. When the retransmit packet is transmitted as the uplink data channel, the uplink control channel includes retransmit format information indicating how the retransmit packet has been derived from a transmitted packet, and transmit format information including at least a data modulation scheme used for the uplink data channel. The downlink control channel includes the acknowledgment information which has been channel-encoded with resource allocation information for the uplink data channel.

### [Advantage of the Invention]

The present invention makes it possible to reduce a larger amount of control information accompanying the uplink data channel relative to related-art schemes.

### BRIEF DESCRIPTION OF THE DRAWINGS

FIG. 1 is a diagram illustrating how uplink data is transmitted from a mobile station according to an instruction from a base station;
FIG. 2 is a view for explaining an effect of erroneous recognition of acknowledgment information;
FIG. 3 is a view for explaining the effect of erroneous recognition of acknowledgment information;
FIG. 4 is a diagram illustrating how redundant version information and a new-old indicator are uniquely associated;
FIG. 5 is a diagram illustrating how acknowledgment information is transmitted with resource allocation information;
FIG. 6 is a diagram illustrating a retransmit control scheme when multiple resources are allocated all at once;
FIG. 7 is an exemplary improvement of the scheme illustrated in FIG. 6;
FIG. 8 is a diagram illustrating a mobile station according to an embodiment of the present invention;
FIG. 9 is a diagram illustrating a base station according to an embodiment of the present invention; and
FIG. 10 is a diagram illustrating a combination of information sets included in an uplink control channel, which must accompany an uplink data channel.

### DESCRIPTION OF THE PREFERRED EMBODIMENTS

### [Description of Notations]

81 Retransmit controller; 82 Channel encoder; 83 Control signal generator; 84 Transmit buffer; 85 Channel encoder; 86 Data signal generator; 87 MUX multiplexer; 91 Demodulator; 92 Packet combiner; 93 Decoder; 94 Error determining unit; 95 Retransmit controller; 96 Scheduler; 97 Channel encoder; 98 Control signal generator

### [Best Mode of Carrying Out the Invention]

According to one embodiment of the present invention, a communications system performs a synchronous or non-synchronous Automatic Repeat reQuest (ARQ). A user apparatus receives a downlink control channel, and prepares an uplink data channel, and an uplink control channel accompanying the uplink data channel. A retransmit packet is prepared according to acknowledgment information included in the downlink control channel.

When a packet is transmitted in the uplink data channel, the uplink control channel includes transmit format information indicating a format including a data modulation scheme or an encoding rate for the transmit packet, new-old indicating information which indicate whether the packet transmitted in the uplink data channel is a retransmit packet, redundancy information indicating a puncture pattern, and process-number information for performing packet combining. The uplink control channel may also be set to not include transmit format information at least including the data modulation scheme used in the uplink data channel. Moreover, the process-number information does not have to be sent in Sync ARQ.

Alternatively, the uplink control channel includes new-old indicating information which indicates whether a packet transmitted in the uplink data channel is the retransmit packet, which may be set to include neither retransmit format information indicating how the retransmit packet has been derived from the transmitted packet nor the transmit format information which includes at least the data modulation scheme used for the uplink data channel.

The downlink control channel may be set to include the acknowledgment information which has been channel encoded with resource allocation information for the uplink data channel.

### Embodiment 1

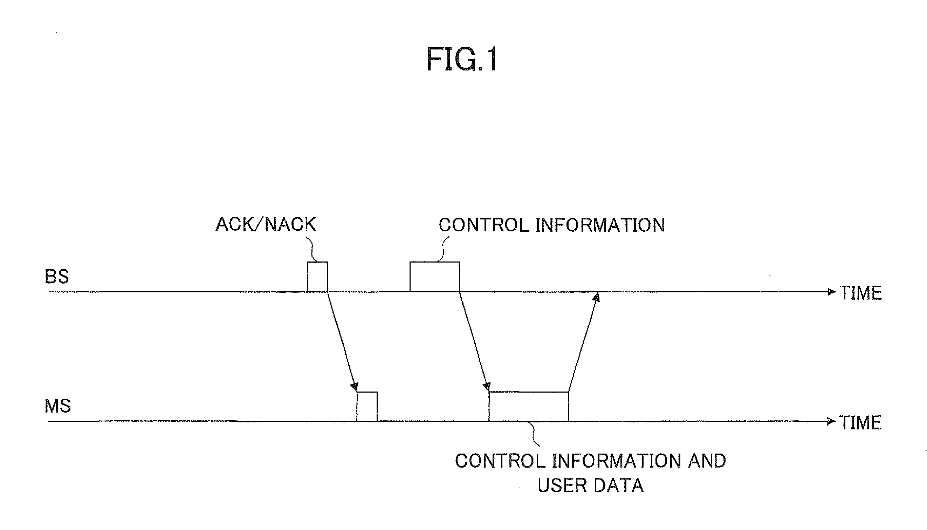

FIG. 1 shows how an MS (Mobile Station) or UE (User Equipment) transmits an uplink channel according to an instruction from a base station (BS, for Base Station, or eNodeB). The base station BS performs uplink scheduling, and transmits, to the mobile Station (MS), control information including allocation information of resources which can be utilized for uplink data channel transmission. The control information (control channel) as described above is also called a downlink L1/L2 control channel. The mobile station (MS) forms an uplink channel according to what has been instructed from the base station, and transmits the formed uplink channel. The uplink channel includes an uplink data channel, and an uplink control channel accompanying the uplink data channel. Similarly to downlink, the uplink control channel, including predetermined information, is called an uplink L1/L2 control channel. The information being included in the uplink L1/L2 control channel includes information which has to accompany the uplink data channel, and information which does have to. The former includes transmit format information for the uplink data channel, and retransmit control information related to retransmission of the uplink data channel. The latter includes acknowledgment information (Acknowledgment ACK or Non-Acknowledgment NACK) for the downlink data channel. In the following description, how information which must accompany the uplink data channel is reported to the base station is primarily explained.

### (Transmit format information)

Transmit format information includes information specifying a data modulation scheme (QAM, 16QAM, 64QAM, etc.) and a channel encoding scheme (1/4, 1/2, 6/7, etc.) that are used for the uplink data channel. The channel coding scheme may be directly specified, or derived uniquely from the data modulation scheme and a data size (a transport block size). The transmit format information may be specified with the MCS number as described above.

When the transmit format information which is the same as the transmit format information determined by the base station BS in scheduling is always used at the time of uplink transmission, it is not mandatory to include the transmit format information in the uplink control channel. This is because the base station has determined, in scheduling, at what timing and at what frequency and in what transmit format, the uplink data channel should be transmitted, and the transmit format information is known. Therefore, when the transmit format which is the same as what has been instructed is always used at the time of transmitting from the user apparatus, the transmit format information can be omitted, by which amount of the omission, information amount of the uplink control channel may be decreased.

Conversely, when the transmit format used for the uplink data channel is not always the same as what has been instructed from the base station, it is necessary to include the transmit format information. It is also possible to perform estimation at the base station by restricting the changes.

Even when the transmit format which is the same as what has been instructed is always used at the time of transmitting from the user apparatus, it is not meaningless to have the transmit format information included in the uplink control channel. For example, the MCS number of 5 reported by the base station BS to the mobile station MS could be recognized as the MCS number of 3 erroneously by the mobile station MS due to fading, etc. In this case, if the MCS number had not been included in the uplink control channel, the base station BS cannot properly demodulate the uplink control channel transmitted with the MCS number 3 (this is because the demodulation is sought with the MCS number of 5). If the transmit format information had been included in the uplink control channel, such a problem could be dealt with.

### (Retransmit control information)

Retransmit control information related to the uplink data channel includes a process number, a redundant version, and a new-old indicator.

### (Process number)

The process number is information associating a transmitted packet with a retransmit packet for the transmitted packet, or, in other words, a buffer number used in buffer combining. In Synchronous ARQ, a timing that the retransmit packet for a certain packet transmitted is to be transmitted is fixed in advance. For example, it has been determined that, the retransmit packet is transmitted 10 TTIs after the transmitted packet. TTI, which is a transmit time interval of one packet and is also called a sub-frame, is typically 1.0 ms, but may also be a different value. In Non-Synchronous ARQ, such a rule does not exist with respect to the retransmit timing, so that the retransmit packet is transmitted at an appropriate timing due to a channel state, etc. Therefore, the process number included in the uplink control channel is mandatory in the Non-synchronous ARQ, but not in the Synchronous ARQ. For the Synchronous ARQ, a control information amount may be saved by an amount corresponding to the fact that the process number does not need to be included in the uplink control channel. For the Non-synchronous ARQ, such saving is not possible, but, instead, it is made possible for the retransmit packet to be transmitted at an appropriate timing according to the channel state, etc. For example, it may also be set such that, when the base station BS is at the best channel state, an initial packet is transmitted, while when it is at other channel states, the retransmit packet is transmitted.

### (Redundant version information)

The redundant version information represents packet format information indicating how the retransmit packet is derived from a transmitted packet. The packet format information is also called a puncture pattern. The retransmit packet may or may not include completely the same information as the transmitted packet. For example, in the former case, an error-detected packet is discarded, error detection is performed again for the retransmit packet, and the process may be continued until the error ceases to be detected. In the latter case, information (soft decision information) regarding the error-detected packet is kept, which may combined with the retransmit packet to achieve an improved SINR. Such operation as described above is called packet combining. There is more than one method, or various methods for the packet combining. Thus, how the retransmit packet is combined (whether or not the packets are the same at initial transmissions, the method of the packet combining when they are not) may be changed adaptively, or determined uniquely in a system. With the former, which is called Adaptive ARQ, it is mandatory to include the redundant version information in the uplink control channel. With the latter, which is called Non-Adaptive ARQ, it is not mandatory to include redundant version information in the uplink control channel, making it possible to reduce the control information amount by an amount corresponding to the omission.

### (New-old indicator)

The new-old indicator is information indicating whether the packet transmitted in the uplink data channel is a retransmit packet (whether it is a new packet or a retransmit packet), and is also called a new data indicator. If Acknowledgment information (ACK/NACK) for the uplink data channel is always reported from the base station BS to the mobile station MS without fail, the new-old indicator is not necessary. This is because it is possible to determine whether the packet which has been received at the base station is the retransmit packet based on the accompanying process number, or based on what predetermined timing it has been received.

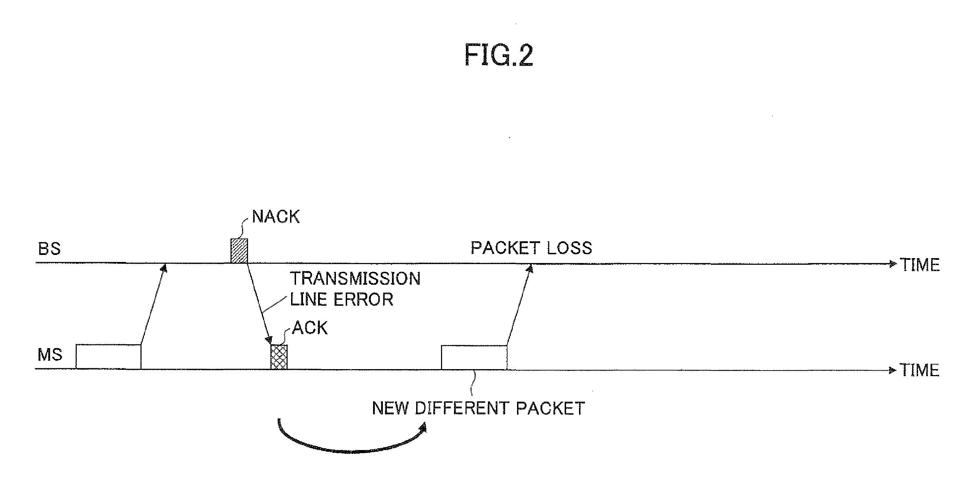

FIG. 2 is a view for explaining the effect of erroneous recognition of acknowledgment information (ACK/NACK). First, let us assume that first a mobile station MS transmits a certain uplink data channel, and then a base station BS detects that there is an error with respect to the constituting packet. In this case, the base station BS transmits, to the mobile station MS, a non-acknowledgment signal (NACK) for the packet. If the mobile station MS recognizes the signal as NACK, a proper retransmission is performed. However, the signal could be recognized as an acknowledgment signal (ACK) as illustrated, depending on the conditions of the propagation path. In such a case, the mobile station MS would transmit a new packet which is different from a retransmit packet. The base station BS may seek to process the received packet as a retransmit packet. However, since the packet is a different new packet, it is not possible to build appropriate information. As a result, signal quality could degrade significantly. Even in such a case as described above, the problem as described above may be avoided if the uplink data channel had been transmitted together with the new-old indicator for the mobile station MS to distinguish the new packet from the retransmit packet.

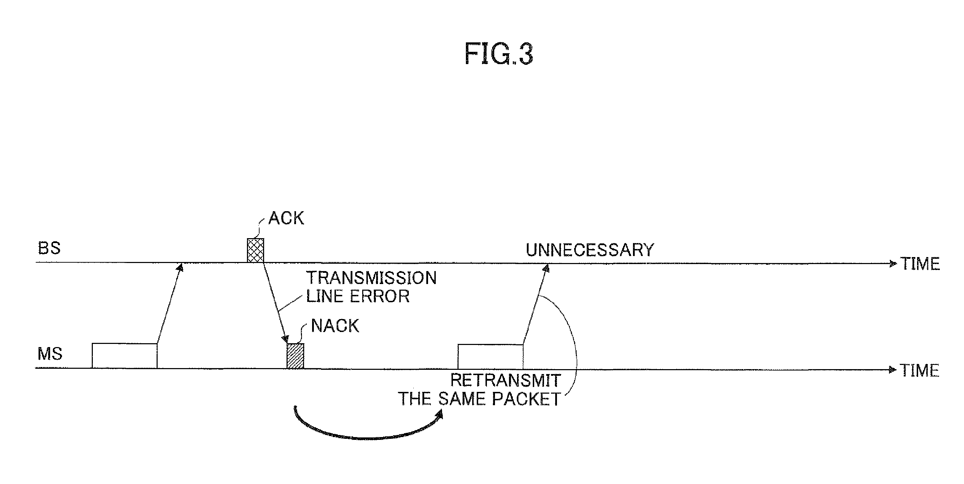

As illustrated in FIG. 3, when an acknowledgment signal (ACK) transmitted by a base station BS is erroneously recognized as a non-acknowledgment (NACK), it suffices for the base station BS to receive unnecessary information.

In this way, it is preferable to include a new-old indicator to an uplink control channel from a point of view of suppressing degradation of signal quality due to erroneous recognition of the acknowledgment signal. Conversely, if the channel state is good, so that it could not be subject to such erroneous recognition as described above, it is not necessary to include the new-old indicator in the uplink control information. Furthermore, the new-old indicator may be omitted in the following manner.

For example, if there are four kinds of redundant version information sets (packet combining methods), which are represented in two bits, and the new-old indicator is expressed in one bit, a total of three bits is needed to cover all possible combinations. However, since the new packet is only expressed in one way, it is not useful to make it possible to express many kinds of packet combining methods for the new packet.

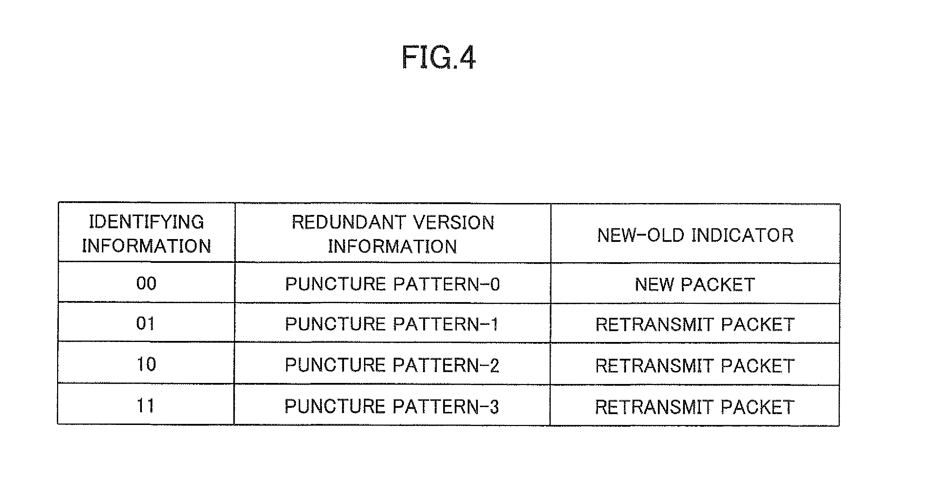

FIG. 4 shows how relationships between redundant version information sets and new-old indicators such that the respective new-old indicators may be uniquely derived from the corresponding redundant version information are defined, representing the respective relationships as 2-bit identifying information. What are in the redundant version information and new-old indicator may be indicated in 2 bits. The redundant version information and new-old indicator do not have to be prepared separately.

### (Increasing the quality of ACK/NACK)

As shown in FIG. 1, the base station BS transmits, to the mobile station MS, acknowledgment information (ACK/NACK) for the uplink data channel. The mobile station MS desires to prepare a new packet or a retransmit packet according to the acknowledgement information to transmit the packet. However, the desire cannot be met unless the resources (frequency-resource block, transmit power, etc.) are actually allocated. The new packet or the retransmit packet is prepared and transmitted only when resource allocation information (including transmit format information) for the uplink data channel is reported to the mobile station MS. Unlike the base station BS, it is not so meaningful for the mobile station MS to transmit only the acknowledgment information early. This is because the base station BS plans what resources are to be allocated, so that the earlier the reception of acknowledgment information for the downlink channel, the earlier the acknowledgment information can be reflected in the downlink scheduling. This is because a mere early reception of the acknowledgment information by the mobile station does not make it possible for the uplink data channel to be prepared.

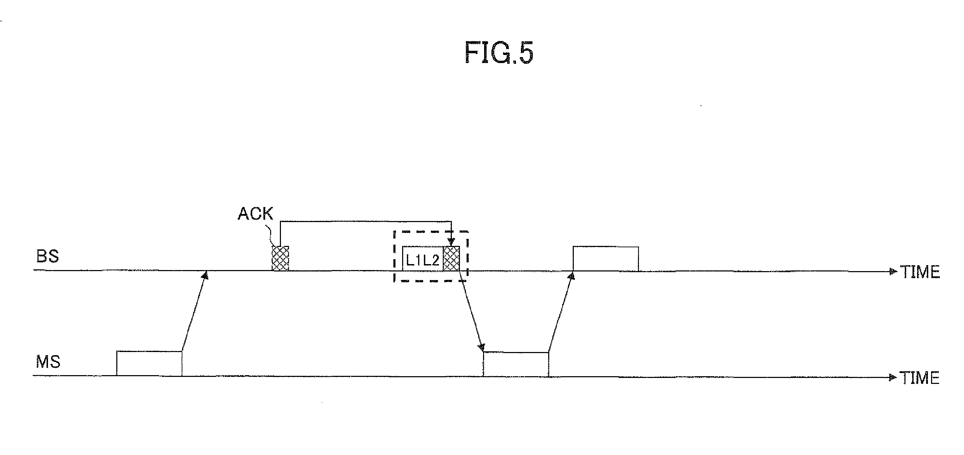

As illustrated in FIG. 5, in one embodiment of the present invention, an acknowledgment information set (ACK/NACK) for a past uplink data channel packet is channel encoded with a resource allocation information set for a future uplink data channel, which information sets are together reported to the mobile station MS. In this way, a delay in the transmit timing of the acknowledgment information would not cause a delay in the transmit timing of the uplink data channel because the mobile station can transmit the uplink data channel and uplink control channel only after the resource allocation information is received. Furthermore, the information amount of the acknowledgment information itself is small, so that a small increase in the information amount of the downlink L1/L2 control channel should not cause any actual harm.

Since the acknowledgment information essentially should not require more than one bit, the information amount required to express the information is very small. Thus, the related-art acknowledgment information is outside the scope of error detection or error correction. On the contrary, in the example shown in FIG. 5, information including both the acknowledgement information and resource allocation information is channel encoded, and the acknowledgment information is also transmitted in the same manner as the downlink L1/L2 control channel, which is transmitted at high quality. The acknowledgment information is thus expected to be transmitted, at high quality, to the mobile station MS, so that the new-old indicator may be omitted.

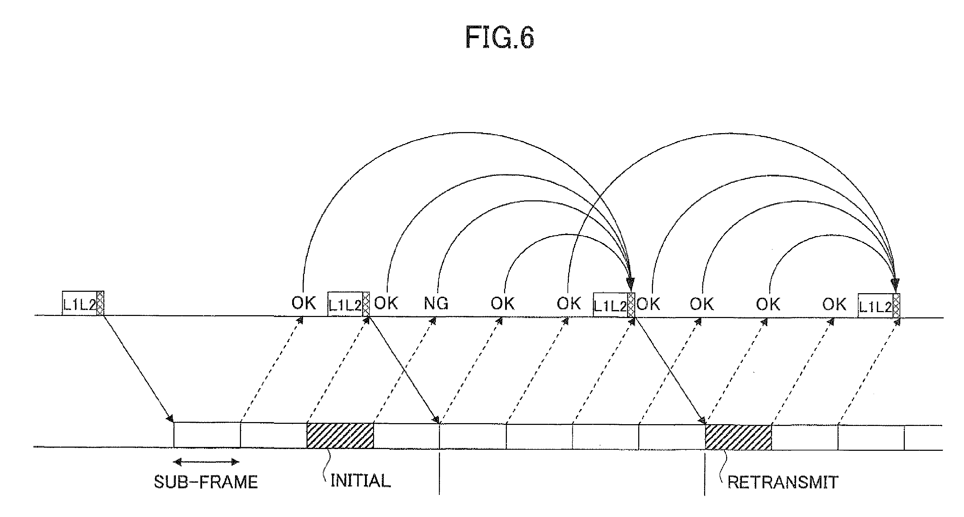

As shown in FIG. 6, what resources are allocated over a series of multiple sub-frames may be reported in all-at-once resource allocation information (illustrated as L1L2). The method shown in FIG. 5 may be applied for such a case as described above. In other words, acknowledgment information for multiple sub-frames are reported with resource allocation information from the base station BS to the mobile station MS. For convenience, as illustrated in a blackbelt-shaped portion accompanying L1L2, the acknowledgment information is stated "OK" (corresponding to ACK) or "NG" (corresponding to NACK). In the illustrated example, all-at-once resource allocation information includes allocation information for four sub-frames. In this case, a transmit timing of the retransmit packet could be delayed significantly. In the illustrated example, an "initial" packet and a "retransmit" packet are 6 sub-frames apart. Four sub-frames being allocated all at once would cause the packets as described above to be apart for a minimum of four sub-frames and for a maximum of 10 sub-frames.

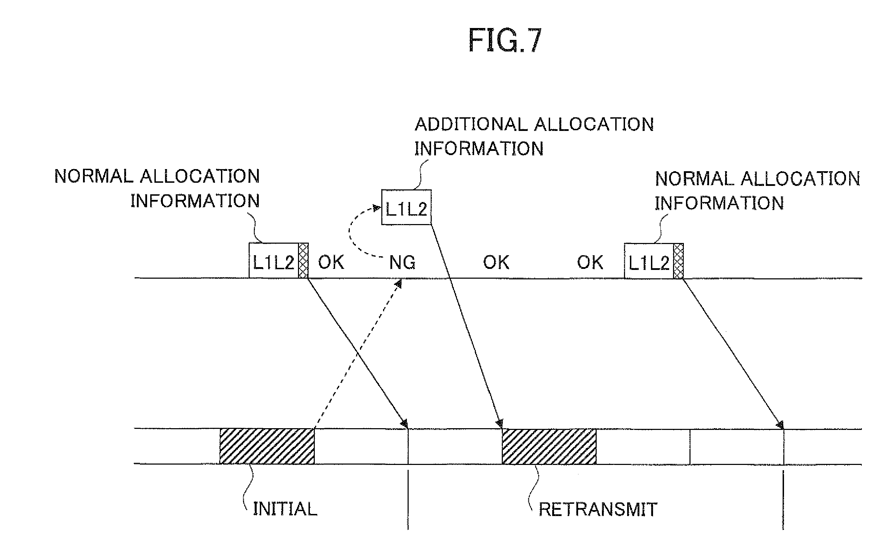

In the example illustrated in FIG. 7, from the point of view of reducing, as much as possible, such delay as described above, scheduling is performed at the time an error in the uplink data channel is detected by the base station BS (at the time NACK is confirmed) . As illustrated, an additional allocation information set scheduled with NG(NACK) as a trigger is prepared in addition to a normal allocation information set, which information sets are reported to the mobile station MS. Thus, the mobile station MS receives both normal and additional allocation information, according to which additional allocation information the uplink data channel is prepared. In other words, additional allocation information has precedence over normal allocation information. In this way, the retransmit packet can be transmitted early.

### (Mobile station)

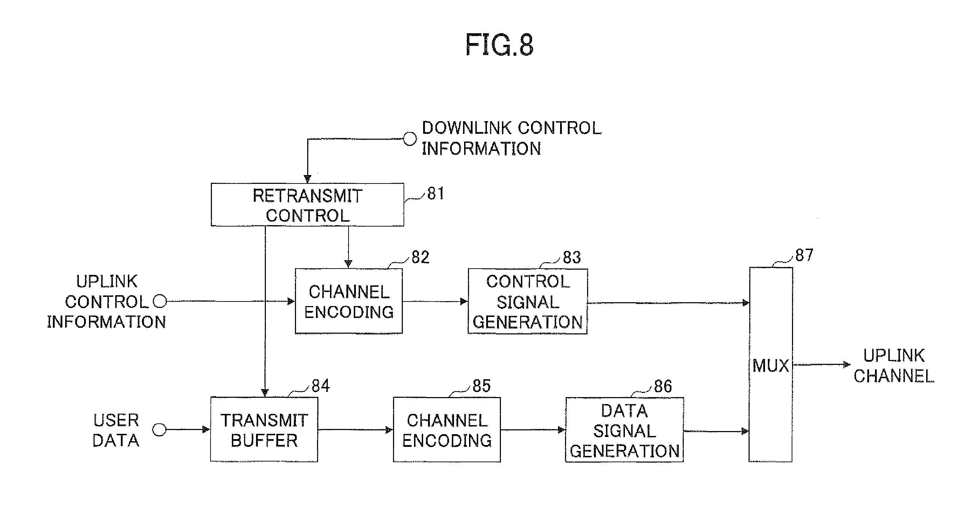

FIG. 8 shows, according to an embodiment of the present invention, a part of a mobile station (which may generally be either the mobile station or a fixed station). FIG. 8 shows a retransmit controller 81, a channel encoder 82, a control signal generator 83, a transmit buffer 84, a channel encoder 85, a data signal generator 86, and a multiplexer (MUX) 87.

The retransmit controller 81 determines whether a retransmit is needed, specifies what is to be retransmitted, and prepares a retransmit packet according to a downlink control channel (downlink control information) received from the base station.

The channel encoder 82 encodes an uplink control channel using a predetermined channel encoding scheme.

The control signal generator 83 data-modulates the encoded uplink control information, and creates a base band control signal for wirelessly transmitting using a single-carrier scheme.

The transmit buffer 84 receives user data and accumulates the data until the transmit timing is reached. The data could constitute an uplink data channel.

The channel encoder 85 encodes the data channel using a channel-encoding scheme which is instructed from the base station. The channel encoding scheme is performed according to the transmit format information within the downlink control channel.

The data signal generator 86 data-modulates the encoded uplink data, and creates a base band uplink data channel for wirelessly transmitting using a single-carrier scheme. The data modulating scheme is performed according to the transmit format information within the downlink control channel.

The multiplexer (MUX) 87 appropriately maps the control channel and the data channel in time and frequency directions, and outputs a transmit symbol. The transmit symbol is appropriately converted to a radio signal and transmitted to the base station in a single-carrier scheme.

### (Base station)

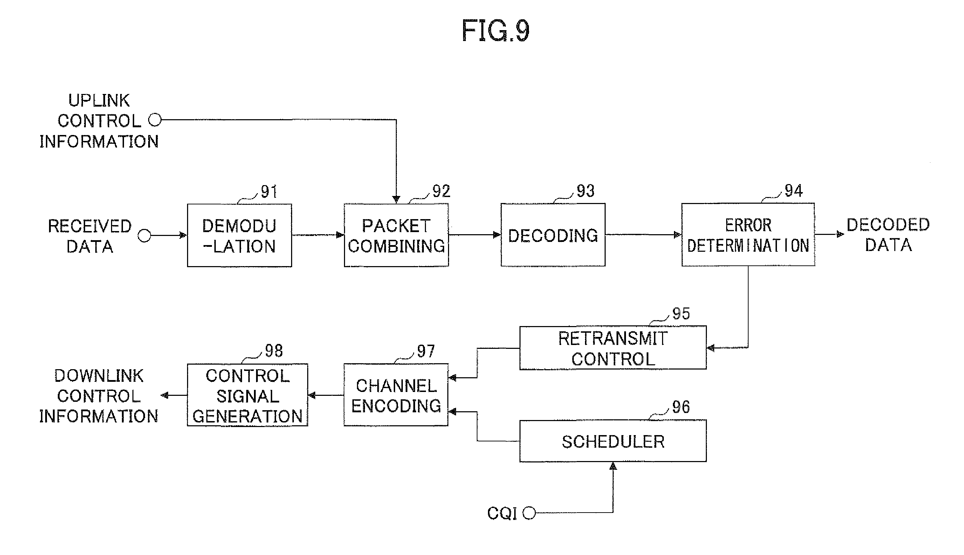

FIG. 9 shows a part of a base station according to an embodiment of the present invention. FIG. 9 shows a demodulator 91, a packet combiner 92, a decoder 93, an error determining unit 94, a retransmit controller 95, a scheduler 96, a channel encoder 97, and a control signal generator 98.

The demodulator 91 demodulates an uplink data channel received from the mobile station.

The packet combiner 92 combines previously-received packet and information received as a retransmit packet. What packet combining method is to be used may be designated each time according to uplink control information, or determined, not according to such information from the mobile station, but based on information previously determined at the base station.

The decoder 93 decodes the uplink data channel packet.

The error determining unit 94 determines whether there is an error in the received packet. The determined result is reported to the retransmit controller 95. The determined result is expressed with a signal showing that there is no error (OK) or with a signal showing that there is an error (NG).

The retransmit controller 95 determines whether retransmission is needed, and specifies what to retransmit. If the retransmission is not needed, acknowledgment information indicating an acknowledgment signal (ACK) is output. Otherwise, acknowledgment information indicating a non-acknowledgment signal (NACK) is output.

The scheduler 96 performs scheduling related to the uplink based on the uplink channel state, etc. In other words, it is determined which mobile station should transmit the uplink data channel at what frequency, when, in what transmit format, and at what transmit power level. What is scheduled is output as resource allocation information.

The channel encoding unit 97 channel-encodes both resource allocation information and acknowledgment information.

The control signal generator 98 creates a base band downlink control channel which includes the resource allocation information and acknowledgment information. Subsequently, the downlink control channel (L1/L2 control channel) is transmitted to the mobile station.

### (Exemplary configuration of uplink control channel)

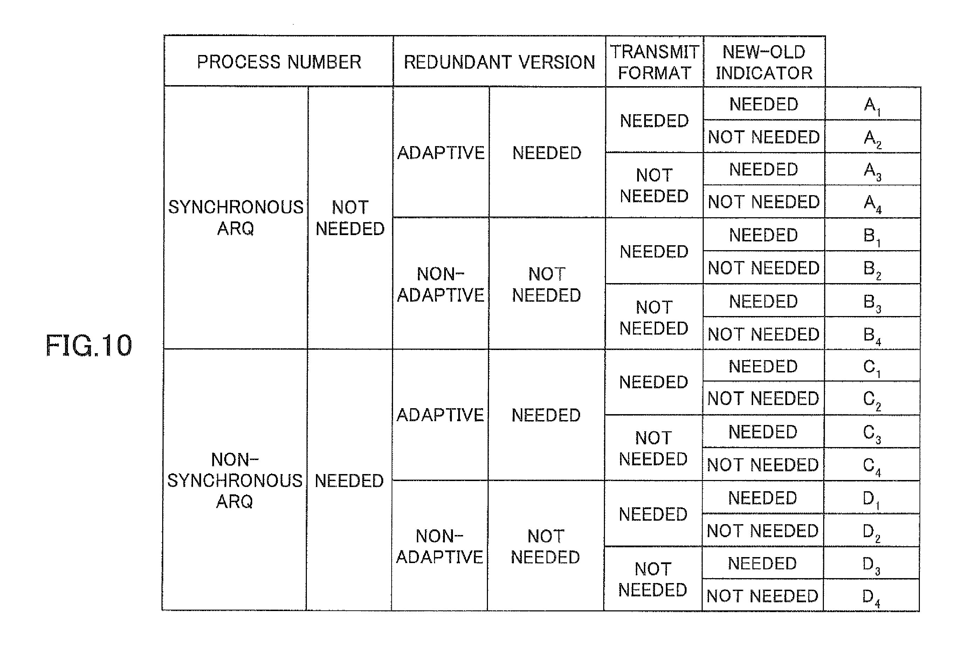

FIG. 10 shows an exemplary configuration of the uplink control channel in a list format. As described above, in the uplink control channel accompanying the uplink data channel, the transmit format information set and retransmit control information set (process number, redundant version number, new-old indicator) are included. It is not mandatory for all of such various information sets to be included in the uplink control channel. Various cases are possible, ranging from a case such that all such information sets are included in the uplink control channel to a case such that no such information sets are included in the uplink control channel. As illustrated with the "process number" column, the process number is not needed when a synchronous ARQ is used, and is needed when a non-synchronous ARQ is used. Next, as shown in the "redundant version" column, the redundant version is needed when an adaptive ARQ is used, and is not needed when a non-synchronous ARQ is used. Moreover, as shown in the "transmit format" column, the transmit format is needed when it is not uniquely determined, and is not needed otherwise. Then, as shown in the "new-old indicator" column, the new-old indicator also may or may not be included in the uplink control channel. If not included, the channel state may be good. The resource allocation information and the acknowledgment information may be channel-encoded so as to be transmitted in the downlink control channel, or uniquely derived from the redundant version information. As illustrated, A₁...A₄...D₁...D₄ on the right side are labels attached for convenience of explanation.

As illustrated, C₁ is a case such that all of four information sets, namely, transmit format information, and transmit control information sets (process number, redundant version number, and new-old indicator), are included in the uplink control channel. For C₁, the number of uplink control channels is largest, while the degree of freedom to link adaptation, etc. is largest. On the contrary, for B₄, none of the four information sets need to be included in the uplink control channel. Thus, the control information amount which must accompany the uplink data channel may be set to a minimum. Only designated retransmit timing, packet combining method, and transmit format may be used, so that a degree of freedom with respect to link adaptation is at a minimum. For B₁₋₄ and D₁₋₄, the redundant version number is not variable, so that, for B₄ and D₄, it is not possible to utilize the redundant version information to derive the old-new indicator. Thus, in such cases, it is desirable for the resource allocation information and acknowledgment information to be channel-encoded so as to be transmitted in the downlink control channel.

As described above, while the present invention is described with reference to specific embodiments, the respective embodiments are merely exemplary, so that a skilled person will understand variations, modifications, alternatives, and replacements. While specific numerical value examples are used to facilitate understanding of the present invention, such numerical values are merely examples, so that any appropriate value may be used unless specified otherwise. Breakdown of the respective embodiments are not essential to the present invention, so that two or more embodiments may be used as needed. For convenience of explanation, while the apparatus according to the embodiments of the present invention is explained using functional block diagrams, such apparatus as described above may be implemented in hardware, software, or a combination thereof. The present invention is not limited to the above embodiments, so that variations, modifications, alternatives, and replacements are included in the present invention without departing from the spirit of the present invention.

The present international application claims priority based on Japanese Patent Application No. 2006-272349 filed on October 3, 2006, the entire contents of which are hereby incorporated by reference.

## Claims

1. A user apparatus which is used in a communications system in which a synchronous or non-synchronous ARQ is performed, comprising:
a unit which receives a downlink control channel;
a unit which prepares an uplink data channel;
a unit which prepares an uplink control channel accompanying the uplink data channel; and
a unit which prepares a retransmit packet according to acknowledgement information included in the downlink control channel, wherein
when the retransmit packet is transmitted as the uplink data channel, the uplink control channel includes retransmit format information indicating how the retransmit packet has been derived from a transmitted packet, and transmit format information including at least a data modulation scheme used for the uplink data channel, and wherein
the downlink control channel includes the acknowledgment information which has been channel-encoded with resource allocation information for the uplink data channel.

2. A user apparatus which is used in a communications system in which a synchronous or non-synchronous ARQ is performed, comprising:
a unit which receives a downlink control channel;
a unit which prepares an uplink data channel;
a unit which prepares an uplink control channel accompanying the uplink data channel; and
a unit which prepares a retransmit packet according to acknowledgement information included in the downlink control channel, wherein
when the retransmit packet is transmitted as the uplink data channel, the uplink control channel includes retransmit format information indicating how the retransmit packet is derived from a transmitted packet, and new-old indicating information which indicates whether the packet transmitted in the uplink data channel is the retransmit packet, but does not include transmit format information which includes at least a data modulation scheme used for the uplink data channel.

3. A user apparatus which is used in a communications system in which a synchronous or non-synchronous ARQ is performed, comprising:
a unit which receives a downlink control channel;
a unit which prepares an uplink data channel;
a unit which prepares an uplink control channel accompanying the uplink data channel; and
a unit which prepares a retransmit packet according to acknowledgement information included in the downlink control channel, wherein
when the retransmit packet is transmitted as the uplink data channel, the uplink control channel includes retransmit format information indicating how the retransmit packet has been derived from a transmitted packet, and wherein
the downlink control channel includes the acknowledgment information which has been channel-encoded with resource allocation information for the uplink data channel.

4. A user apparatus which is used in a communications system in which a synchronous or non-synchronous ARQ is performed, comprising:
a unit which receives a downlink control channel;
a unit which prepares an uplink data channel;
a unit which prepares an uplink control channel accompanying the uplink data channel; and
a unit which prepares a retransmit packet according to acknowledgement information included in the downlink control channel, wherein
when the retransmit packet is transmitted as the uplink data channel, the uplink control channel includes transmit format information including at least a data modulation scheme used for the uplink data channel, but not including retransmit format information indicating how the retransmit packet has been derived from a transmitted packet, and wherein
the downlink control channel includes the acknowledgment information which has been channel-encoded with resource allocation information for the uplink data channel.

5. A user apparatus which is used in a communications system in which a synchronous or non-synchronous ARQ is performed, comprising:
a unit which receives a downlink control channel;
a unit which prepares an uplink data channel;
a unit which prepares an uplink control channel accompanying the uplink data channel; and
a unit which prepares a retransmit packet according to acknowledgement information included in the downlink control channel, wherein,
when the retransmit packet is transmitted as the uplink data channel, the uplink control channel includes new-old information indicating whether a packet transmitted in the uplink data channel is the retransmit packet, but includes neither one of retransmit format information indicating how the retransmit packet is derived from a transmitted packet and transmit format information which includes at least a data modulation scheme used for the uplink data channel.

6. A user apparatus which is used in a communications system in which a synchronous or non-synchronous ARQ is performed, comprising:
a unit which receives a downlink control channel;
a unit which prepares an uplink data channel;
a unit which prepares an uplink control channel accompanying the uplink data channel; and
a unit which prepares a retransmit packet according to acknowledgement information included in the downlink control channel, wherein
the downlink control channel includes the acknowledgment information which has been channel-encoded with resource allocation information for the uplink data channel.

7. A base station which communicates with a user apparatus used in a communications system in which a synchronous or non-synchronous ARQ is performed, comprising:
a unit which receives an uplink data channel, and an uplink control channel accompanying the uplink data channel;
a unit which channel-encodes, with resource allocation information for the uplink data channel, acknowledgment information indicating whether retransmitting of a packet constituting the uplink data channel is needed, and prepares downlink control information, and
a unit which transmits a downlink control channel including the downlink control information.

8. A method which is used in a communications system in which a synchronous or non-synchronous ARQ is performed, comprising the steps of:
transmitting a downlink control channel;
preparing an uplink data channel, and an uplink control channel accompanying the uplink data channel; and
preparing a retransmit packet according to acknowledgement information included in the downlink control channel, wherein
(1) when the retransmit packet is transmitted as the uplink data channel, the uplink control channel includes retransmit format information indicating how the retransmit packet is derived from a transmitted packet, and new-old indicating information which indicates whether a packet transmitted in the uplink data channel is the retransmit packet, but does not include transmit format information which includes at least a data modulation scheme used for the uplink data channel, or
(2) when the retransmit packet is transmitted as the uplink data channel, the uplink control channel includes new-old indicating information which indicates whether a packet transmitted in the uplink data channel is the retransmit packet, but includes neither one of retransmit format information indicating how the retransmit packet is derived from a transmitted packet and transmit format information which includes at least a data modulation scheme used for the uplink data channel, or
(3) the downlink control channel includes acknowledgment information which has been channel-encoded with resource allocation information for the uplink data channel.

9. The method as claimed in claim 8, wherein, for (1), the new-old indicating information is uniquely derived from the retransmit format information.
